# EUROPEAN PATENT SPECIFICATION

(11) **EP 2 657 437 B1**
(45) Date of publication and mention of the grant of the patent: **24.07.2019**
(21) Application number: 13164658.0
(22) Date of filing: 22.04.2013
(51) Int. Cl.: E05B 17/14, E05B 17/18, E05B 47/00, B62H 5/00, B60R 25/00

(54) **Cylinder lock protection apparatus**
Zylinderschlossschutzvorrichtung
Appareil de protection de serrure à cylindre

(30) Priority: 23.04.2012 JP 2012097834
(43) Date of publication of application: 30.10.2013
(73) Proprietor: Asahi Denso Co., Ltd., Hamamatsu-shi Shizuoka 434-0046 (JP); Yamaha Hatsudoki Kabushiki Kaisha, Iwata-shi, Shizuoka 438-8501 (JP)
(72) Inventor: Suzuki, Michiyuki, Hamamatsu-shi, Shizuoka 434-0046 (JP); Ohta, Mitsuhiro, Hamamatsu-shi, Shizuoka 434-0046 (JP); Maekawa, Koji, Iwata-shi, Shizuoka 438-8501 (JP)
(74) Representative: Grünecker Patent- und Rechtsanwälte PartG mbB

(56) References cited:
- EP-A2- 1 304 443
- DE-U1- 20 016 845
- JP-A- 2001 317 243
- JP-A- 2002 322 837

## Description

### TECHNICAL FIELD

The present invention relates to a cylinder lock protection apparatus which can prevent the destruction or the like of a cylinder lock for use in a two wheeled vehicle.

### BACKGROUND ART

A cylinder lock for a two wheeled vehicle normally includes a rotor having a key hole into which an ignition key can be inserted and pulled out. Conventionally, in order to prevent the cylinder lock from being harmed and destructed by a third person inserting scissors, a driver or the like into the key hole, there is proposed a cylinder lock protection apparatus. Such protection apparatus, as disclosed, for example, in the patent reference 1, includes a shutter movable from a closing position where the key hole is closed to an opening position where the key hole is opened, a housing for holding the shutter movably between the opening and closing positions, a magnet lock lockable by holding the shutter at the closing position to thereby close the key hole, and a magnet key capable of releasing the locking of the magnet lock using the magnetism of a magnet

Further, the conventional cylinder lock protection apparatus disclosed in the cited patent reference includes a motor, which can be rotated forwardly and reversely by remote-control operation using a remote control or the like, and a solenoid, whereby the shutter can be opened and closed by remote-control operation using the remote control or the like in addition to the manual operation using the magnet lock and magnet key. Thus, the opening and closing operation of the key hole by the shutter can be carried out by the manual operation and remote-control operation, thereby be being able to enhance the operation efficiency of the protection apparatus. Patent Reference 1 discloses a cylinder lock protection apparatus as described in the preamble of claim 1.

### [Prior Art Teclmology Reference]

### [Patent Reference]

[Patent Reference 1]
Japanese Patent Publication 2001-317243

However, in the above-cited conventional cylinder lock protection apparatus, although
the shutter can be opened and closed by the remote-control operation using the remote control in addition to by the manual operation to thereby be able to enhance the operation efficiency thereof, a structure for the remote-control operation must be provided separately and independently from a structure for the manual operation. This raises a problem that the apparatus structure is complicated.

JP 2002 322837 A discloses a cylinder lock protection apparatus comprising a shutter, engaging means and releasing means, which include manually releasing means for manually releasing the engagement made by the engaging means and remote-controllably releasing means.

### SUMMARY

One or more embodiments of the invention provide a cylinder lock protection apparatus which can operate a shutter by a manual operation and by a remote-control operation and also can simplify its structure.

In accordance with one or more embodiments of the invention, a cylinder lock protection apparatus, comprises: a housing adapted to be provided above a rotor in which a key hole for inserting and pulling out an ignition key is formed; a shutter which is movable between a closing position and an opening position within the housing and adapted to close the key hole at the closing position and to open the key hole at the opening position; urging means adapted to normally urge the shutter toward the opening position; engaging means adapted to be capable of engaging the shutter existing at the closing position; and, releasing means adapted to release the engagement of the shutter made by the engaging means to thereby move the shutter from the closing position to the opening position using the urging force of the urging means, wherein the releasing means includes manually releasing means for manually releasing the engagement of the shutter made by the engaging means and remote-controllably releasing means drivable by remote control for releasing the engagement of the shutter made by the engaging means, and the manually releasing means and remote-controllably releasing means respectively are capable of operating the engaging means to thereby operate the shutter; and the engaging means is a single member including a first portion adapted to receive the operation force of the manually releasing means and a second portion adapted to receive the drive force of the remote-controllably releasing means, wherein the engaging means is capable of being turned about a given shaft, and the first portion is formed on one end side of the engaging means and the second portion is formed on the other end side thereof.

The remote-controllably releasing means may include a solenoid which can be energized by remote control to drive a plunger, and the solenoid, due to the driving of the plunger, can operate the engaging means to thereby release the engagement.

The engaging means may include a cut-out through which a given portion of the plunger can be inserted, and the plunger is inserted through the cut-out to thereby connect together the engaging means and solenoid.

The shutter may include an operation portion capable of manually operating the shutter from the opening position to the closing position.

The releasing means includes manually releasing means for manually releasing the engagement of the shutter made by the engaging means and remote-controllably releasing means drivable by remote control for releasing the engagement of the shutter made by the engaging means, and the manually releasing means and remote-controllably releasing means respectively can operate the engaging means to thereby operate the shutter. Therefore, the shutter can be operated both by hand and by remote control, and also the release of the engagement made by the manually releasing means and the release of the engagement made by the remote-controllably releasing means can be carried out through the common engaging means. This can simplify the structure of the apparatus.

Further, since the engaging means is a single member including a first portion for receiving the operation force of the manually releasing means and a second portion for receiving the drive force of the remote-controllably releasing means, the apparatus structure can be simplified further.

Furthermore, since the engaging means can be turned about a given shaft, and the first portion is formed on one end side of the engaging means and the second portion is formed on the other end side thereof, the release of the engagement by the manually releasing means and the release of the engagement by the remote-controllably releasing means can be carried out smoothly and positively.

Also, since the remote-controllably releasing means includes a solenoid which can be energized by remote control to drive a plunger, and the solenoid, due to the driving of the plunger, can operate the engaging means to thereby release the engagement, the release of the engagement by the remote-controllably releasing means can be carried out more smoothly and positively.

Further, since the engaging means includes a cut-out through which a given portion of the plunger can be inserted, and the plunger is inserted through the cut-out to thereby connect together the engaging means and solenoid, even when the plunger is moved due to impacts, vibrations and the like from outside, the engaging means can be prevented against movement.

Furthermore, since the shutter includes an operation portion capable of manually operating the shutter from the opening position to the closing position, the efficiency of the operation to close the key hole using the shutter can be enhanced further.

### BRIEF DESCRIPTION OF THE DRAWINGS

Fig. 1 is a perspective view of a cylinder lock protection apparatus according to an embodiment of the invention.
Fig. 2 is a front view of the cylinder lock protection apparatus.

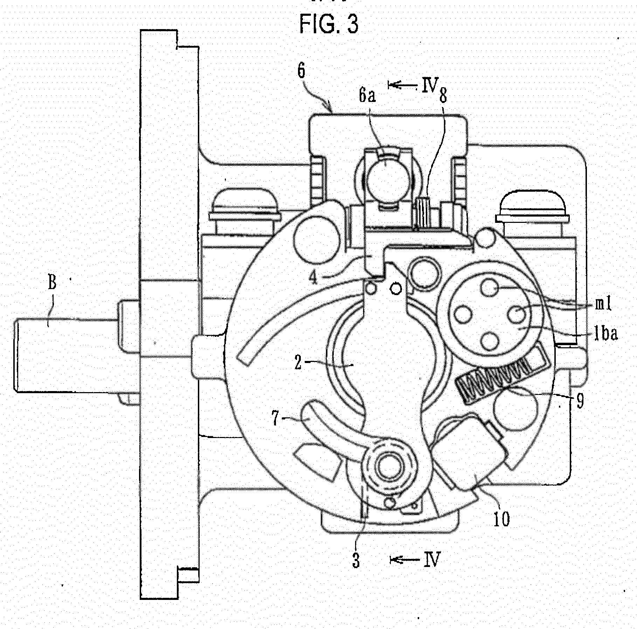

Fig. 3 is a plan view of the cylinder lock protection apparatus.
Fig. 4 is a section view taken along the IV-IV line shown in Fig. 3.
Fig. 5 is a perspective view of a shutter included in the cylinder lock protection apparatus.
Fig. 6 is a five-phase view of the shutter included in the cylinder lock protection apparatus.
Fig. 7 is a perspective view of an engaging device included in the cylinder lock protection apparatus.
Fig. 8 is a five-phase view of the engaging device included in the cylinder lock protection apparatus.
Figs. 9A and 9B are typical section views of a magnet lock used in the cylinder lock protection apparatus, showing the operation thereof.
Figs. 10A to 10C are plan views of a remote-controllably releasing device used in the cylinder lock protection apparatus, showing an operation to release the engagement of the shutter.
Fig. 11 is a section view of the remote-controllably releasing device used in the cylinder lock protection apparatus, showing the operation to release the engagement of the shutter.
Fig. 12 is a plan view of a manually releasing device used in the cylinder lock protection apparatus, showing an operation to release the engagement of the shutter.

### DETAILED DESCRIPTION

Now, description is given below specifically of an embodiment according to the invention with reference to the accompanying drawings.

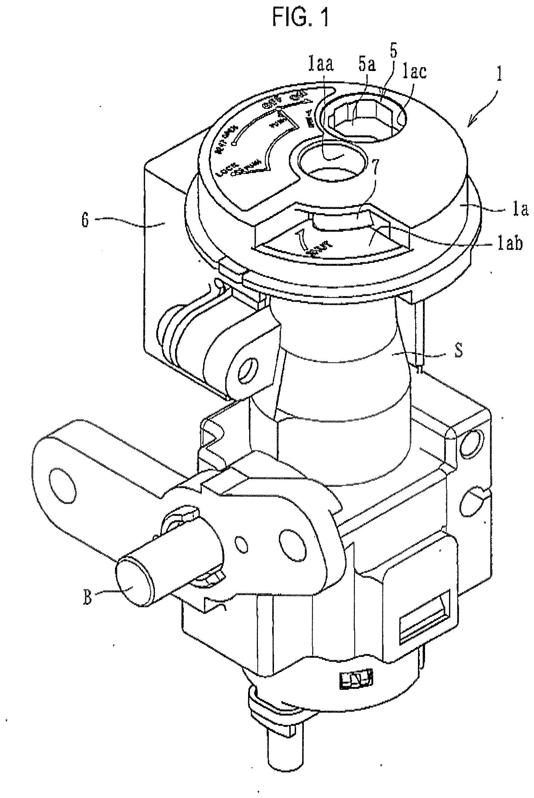

A cylinder lock protection apparatus according to this embodiment is provided upwardly of the key hole of a cylinder lock equipped on a two wheeled vehicle and is capable of opening and closing the key hole from outside to thereby protect the cylinder lock. As shown in Figs. 1 ∼ 9, this apparatus includes a housing 1, a shutter 2, a torsion spring 3 serving as an urging device, an engaging device 4, a magnet lock 5 serving as a releasing device (manually releasing means), and a solenoid 6 serving as a releasing device (remote-controllably releasing means). Here, reference numeral 10 shown in the drawings designates an LED capable of radiating light onto a key hole Ra.

The housing 1 is arranged above a rotor R, and stores therein various parts constituting the protection apparatus and also can store therein the upper end portion of a cylinder body S constituting the cylinder lock. Within the cylinder body S, there is provided the rotor R equipped with multiple tumblers. This rotor R includes the key hole Ra, and an ignition key IK can be inserted into and pulled out from the key hole Ra.

The housing 1 according to this embodiment includes a cover portion 1a and a case portion 1b in which various parts constituting the protection apparatus are arranged, while the cover portion 1a covers the case portion 1b from above. The cover portion 1a includes an insertion hole 1aa into which the ignition key IK can be inserted with the key hole Ra of the rotor R facing outward, a recess portion lab capable of operating an operation portion 7 (which is discussed later), and an opening 1ac with the magnet lock 5 facing outward.

The rotor R can be rotated in a state where the ignition key IK is inserted into the key hole Ra; and, it can be rotated between its "on" position for starting an engine equipped on the wheeled vehicle, its "off" position for stopping the engine and its "lock" position for locking a handle bar equipped on the two wheeled vehicle. Here, in a state where the rotor R is held at the off position, when the ignition key IK inserted in the key hole Ra is pushed in and, in this state, the rotor R is rotated to the left when viewed from above, the rotor R can be rotated to the lock position. In the case that the rotor R is moved to this lock position, a lock bar B provided within the cylinder body S is projected. When the lock bar B is inserted and engaged into a lock hole (not shown) formed in the rotation shaft of the handle bar (not shown) provided on the two wheeled vehicle, the handle bar can be locked.

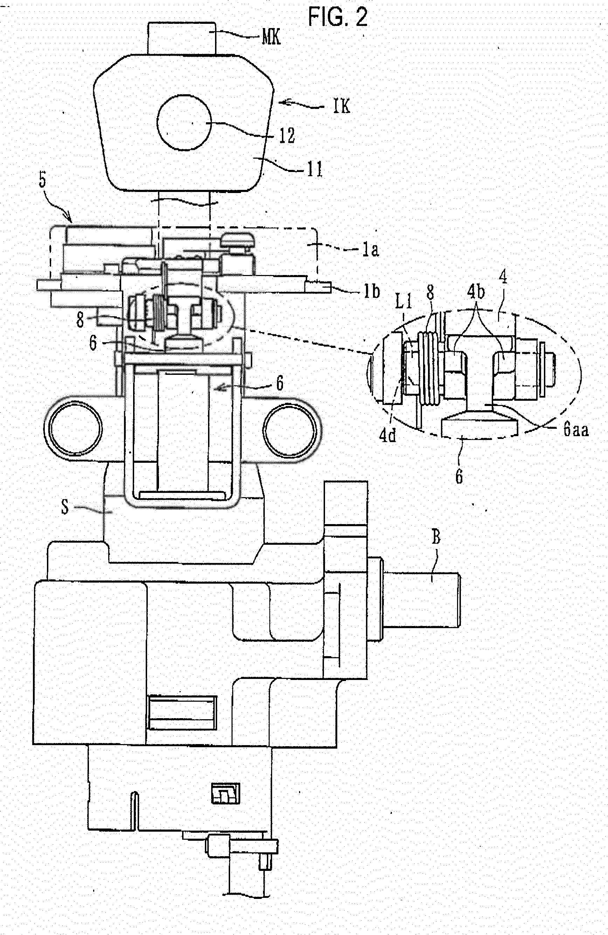

On the other hand, the ignition key IK, as shown in Fig. 2, includes a grip portion 11 formed by a molding part of resin or the like, and a key portion extended from the grip portion 11 and having key crowns and keyways. This key portion can be inserted into the key hole Ra of the rotor R. Also, the grip portion 11 includes a remote-controllable operation button 12. For example, when the operation button 12 is pushed once, right and left turn signals equipped on the vehicle can respond to this while blinking a given number of times; and, when pushed two times successively, a remote-control operation on the solenoid 6 (remote-controllably releasing means) to be discussed later is possible.

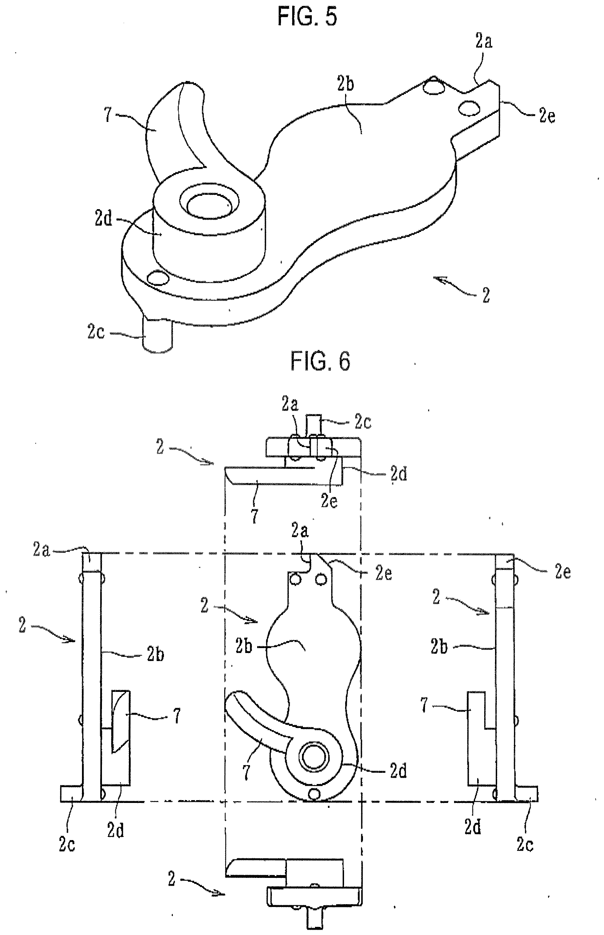

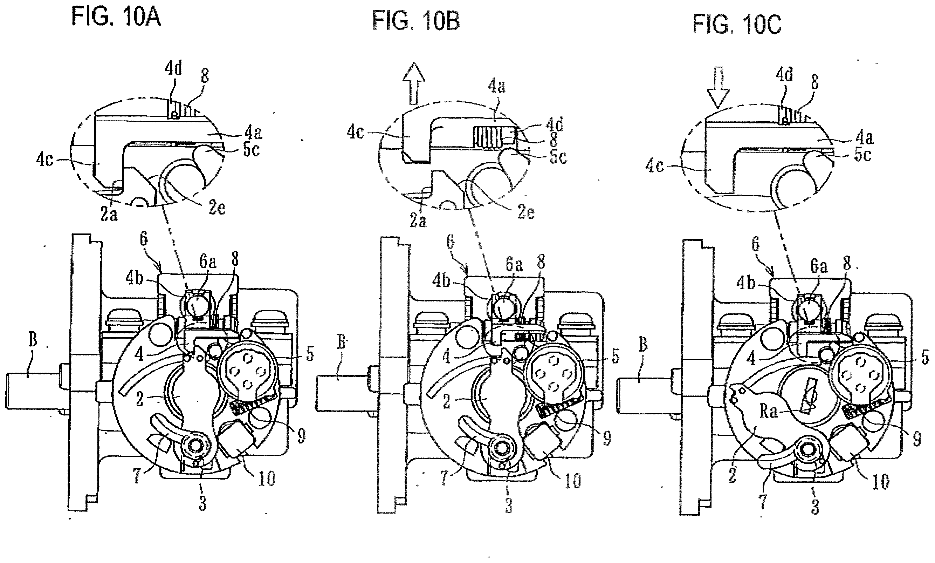

The shutter 2 can be moved (in this embodiment, rotated) between a closing position (see Fig, 10A) and an opening position (see Fig. 10C) within the housing 1, while it can close the key hole Ra at the closing position and can open the key hole Ra at the opening position. Specifically, the shutter 2 according to this embodiment a metal-made member including, as shown in Figs. 5 and 6, an engaged portion 2a, a covering portion 2b, a projecting portion 2c, a rotation center portion 2d and an operation portion 7 all of which are formed as an integral body.

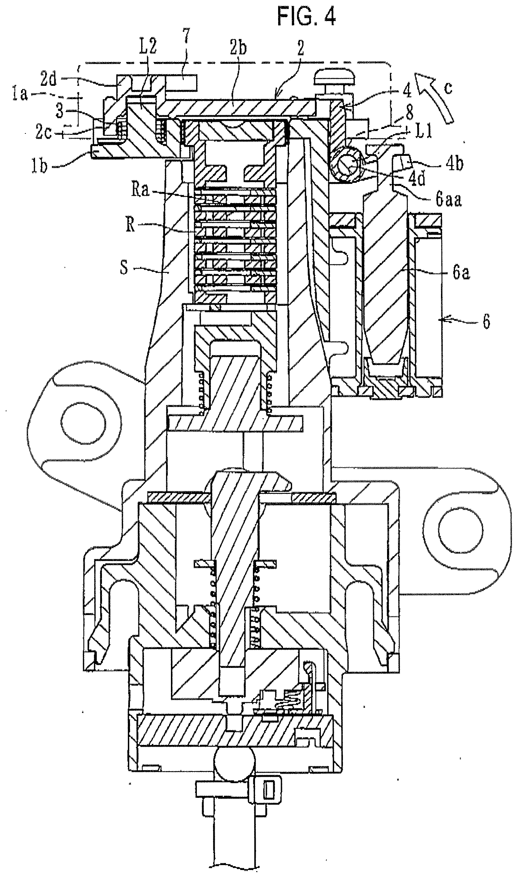

The engaged portion 2a is the portion of the shutter 2 that is to be engaged by the engaging device 4 and is formed in the leading end portion of the shutter 2. The covering portion 2b is the portion of the shutter 2 that is formed substantially in the central portion thereof and is structured that, when the shutter 2 exists at the closing position, it covers and closes the key hole Ra. The projecting portion 2c is the portion of the shutter 2 that is connected to one end of the torsion spring 3 (urging means), and the rotation center portion 2d is the recessed portion of the shutter 2 into which a boss portion L2 (see Fig. 4) projectingly formed on the case portion 1b of the housing 1 can be fitted.

Thus, the shutter 2 is rotatable about the boss portion L2 fitted in the rotation center portion 2d between the opening position and closing position. Also, as described above, one end of the torsion spring 3 serving as an urging device is connected to the projecting portion 2c and the other end thereof is connected to the case portion 1b of the housing 1, whereby the torsion spring 3 normally urges the shutter 2 toward the opening position. When rotating the shutter 2 from the opening position to the closing position, since the torsion spring 3 is twisted by the projecting portion 2c, an urging force toward the opening position is applied. Here, instead of the torsion spring 3, there may also be used other urging device (such as a plate spring, a coil spring, or an elastic member made of soft resin or the like) for normally urging the shutter 2 toward the opening position.

Further, the shutter 2 includes the operation portion 7 capable of manually operating the shutter 2 from the opening position to the closing position. This operation portion 7 is the portion of the shutter 2 that is laterally extended from the rotation center portion 2d integrally therewith and, when the shutter 2 exists in the opening position, since it exists in the portion where the recessed section lab of the cover portion 1a is formed, it can be operated by gripping it with fingers. Also, when the shutter 2 exists in the closing position, since the operation portion 7 exists within the cover portion 1a, it cannot be operated.

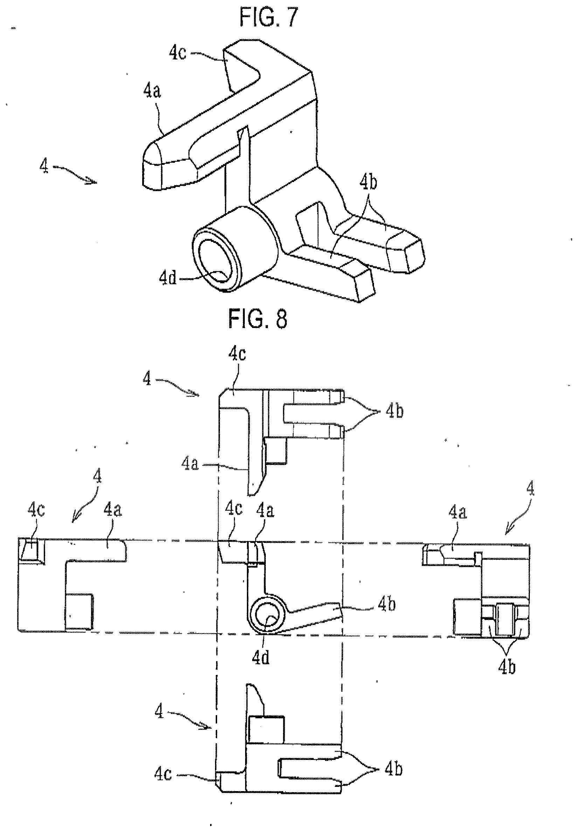

The engaging device 4, as shown in Fig. 4, is capable of engaging the shutter 2 existing at the closing position and, in this embodiment, as shown in Figs. 7 and 8, is a single member (link-shaped member) which includes a first portion 4a for receiving the operation force of the magnet lock 5 (manually releasing means), a second portion 4b for receiving the drive force of the solenoid 7 (remote-controllably releasing means), an engaging portion 4c contactable and engageable with the engaged portion 2a of the shutter 2, and a turn center portion 4d.

The turn center portion 4d has a hole which penetrates through the engaging device 4 in the width direction and through which a turn shaft L1 (see Fig. 4) provided on the housing 1 side (fixed member side) can be inserted. Thus, the engaging device 4 can be turned about the turn shaft L1 (given shaft), while the first portion 4a and engaging portion 4c are formed on one end side of the engaging device 4 and the second portion 4b is formed on the other end side thereof.

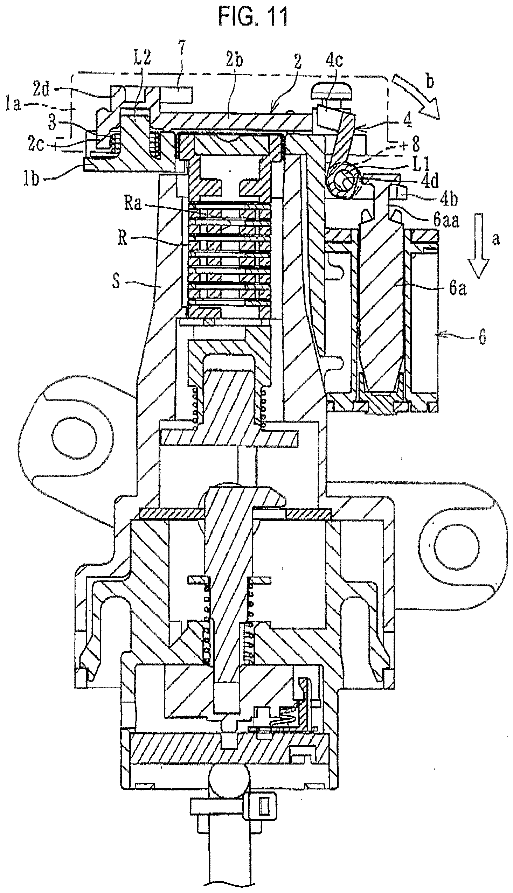

Thus, since the engaging device 4 can turn about the turn shaft L1, it is movable between the position (see Fig. 4) for engaging the shutter 2 and the position (see Fig. 11) for releasing the engagement of the shutter 2. Also, on the turn shaft L1, as shown in Figs. 2 and 4, there is mounted a torsion spring 8 having one end connected to the fixed side and the other end connected to the engaging device 4, while the engaging device 4 is normally urged in the arrow c direction shown in Fig. 4 by this torsion spring 8. Accordingly, the engaging device 4 is normally urged toward the position for engaging the shutter 2.

The magnet lock 5 (manually releasing means) and solenoid 6 (remote-controllably releasing means) respectively serving as releasing devices are used to release the engagement made by the engaging device 4 and move the shutter 2 from the closing position to the opening position using the urging force given by the torsion spring 3 (urging means). That is, in this embodiment, the engagement of the shutter 2 by the engaging device 4 can be released by the manual operation using the magnet lock 5 or by the remote-control operation using the solenoid 6. In other words, by operating the magnet lock 5 and solenoid 6 selectively, the shutter 2 can be operated from the closing position to the opening position.

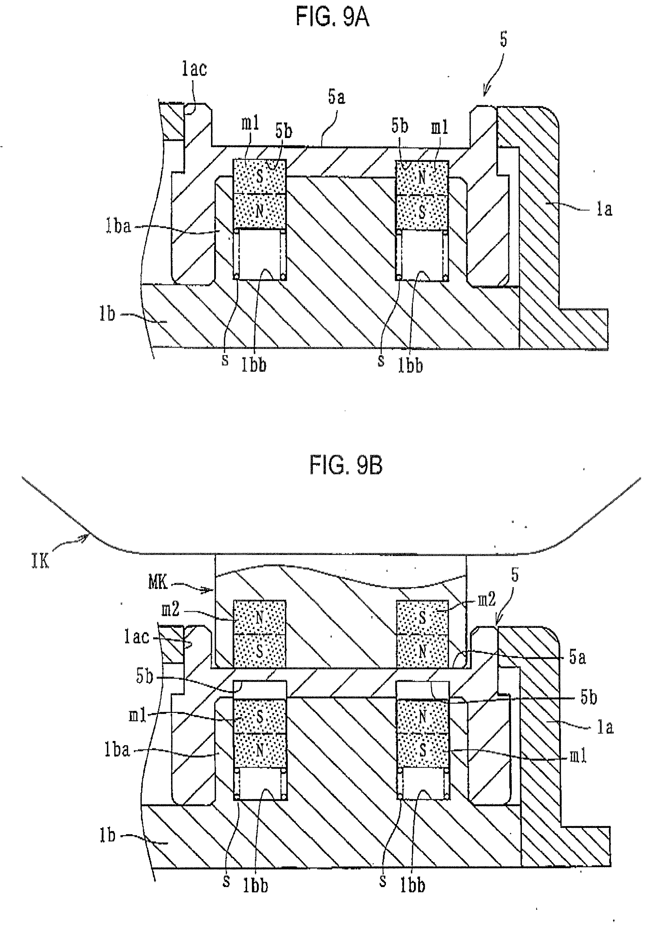

The magnet lock 5(manually releasing means)is used to manually release the engagement made by the engaging device 4 and is a cylindrical member which is fitted in a boss section 1ba formed in the case portion 1b of the housing 1, while the magnet lock 5 is rotatable about this boss section 1ba. More specifically, the boss section 1ba includes, on its upper surface, multiple (in this embodiment, four) storing holes 1bb which store therein magnets m1 and springs s for urging the magnets m1 in the upward direction in Fig. 9. Also, in the positions (of the back surface) of the magnet lock 5 that correspond to the storing holes 1bb, there are formed fitting holes 5b into which the magnets m1 can be fitted. As shown in Fig. 9A, in the case that the magnets m1 are fitted in the fitting holes 5b respectively, the magnet lock 5 is prevented against rotation, thereby being able to lock the magnet lock 5.

On the other hand, the grip portion 11 of the ignition key IK includes a magnet key MK. This magnet key MK has a shape allowing the magnet key MK to be fitted in a fitting portion 5a formed in the upper surface of the magnet lock 5, and magnets m2 are embedded at the positions of the magnet key MK that correspond to the magnets m1. When a proper magnet key MK is fitted in the fitting portion 5a, as shown in Fig. 9B, the magnets m2 are disposed opposed to the magnets m1, and the magnetism of the magnets 1 and the magnetism of the magnets m2 repels each other (that is, the S pole of the magnet m1 and the S pole of the magnet m2 are opposed to each other, while the N pole of the magnet m1 and the N pole of the magnet m2 are opposed to each other).

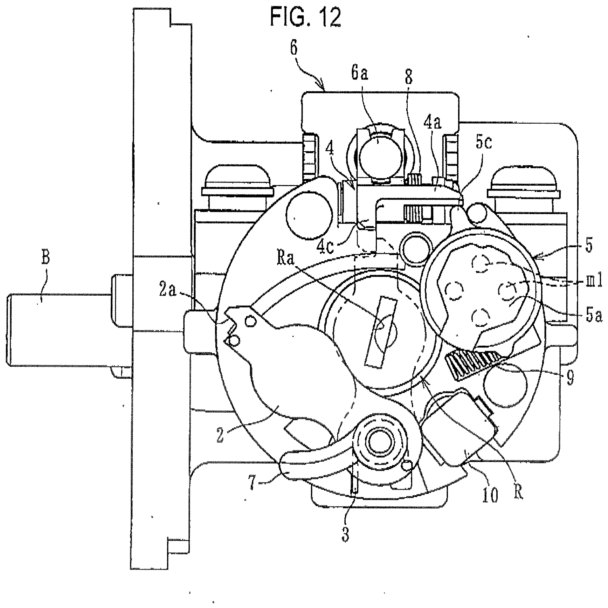

Thus, in the case that the proper magnet key MK is fitted in the fitting portion 5a, the magnets m1 are moved down against the urging forces of the springs s to thereby release their fitting with the engaging holes 5b. While maintaining this state, when the magnet key MK is rotated in a given direction, the magnet lock 5 can be rotated in the same direction. Also, the magnet lock 5 includes a contact portion 5c (see Fig. 12) which is formed at a given position and can be contacted with the first portion 4a of the engaging device 4 while the magnet lock 5 is rotating.

After the fitting by the magnets m1 is released by the magnet key MK, when the magnet lock 5 is rotated in a given direction together with the magnet key MK, as shown in Fig. 12, the contact portion 5c is contacted with the first portion 4a of the engaging device 4 and pushes the first portion 4a in the same direction, whereby the engaging device 4 can be turned against the urging force of the torsion spring 8. This releases the engagement of the shutter 2 made by the engaging device 4, whereby the shutter 2 is moved from the closing position to the opening position by the urging force of the torsion spring 3.

Here, the magnet lock 5 according to this embodiment is normally urged toward the locked position side (the position side where the magnets m1 are fitted to thereby prevent the rotation of the magnet lock 5) by a coil spring 9 provided on the case portion 1b of the housing 1. Thus, after release of the engagement of the shutter 2 made by the engaging device 4, by loosening the operation force of the magnet key MK or by releasing the magnet key MK, the magnet lock 5 is allowed to naturally return to its original position (locked position) due to the urging force of the coil spring 9.

The solenoid 6 (remote-controllably releasing means), when driven by remote control, can release the engagement made by the engaging device 4. In this embodiment, as shown in Figs. 2 and 4, this is a solenoid 6 which can be energized by remote control to thereby drive a plunger 6a. That is, due to the plunger 6a driving, the solenoid 6 can operate the engaging device 4 to release the engagement. More specifically, the second portion 4b of the engaging device 4 provides a cut-out (see Figs. 2 and 4) through which a given portion 6aa (a portion the diameter of which is formed smaller than the other portions) of the plunger 6a can be inserted, and the given portion 6aa of the plunger 6a is inserted through the cut-out to thereby connect together the engaging device 4 and solenoid 6.

When the operation button 12 of the grip portion 11 of the ignition key IK is pushed (for example, pushed twice successively), a given signal constituted of radio waves is transmitted. When a receiver (not shown) receives this signal, a coil (not shown) within the solenoid 6 is energized to lower (move in the arrow a direction shown in Fig. 11) the plunger 6a, thereby pulling the second portion 4b (the portion connected to the plunger 6a through the cut-out) in the same direction, so that the engaging device 4 can be turned in the arrow b direction shown in Fig. 11 against the urging force of the torsion spring 8. Due to this, the engagement of the shutter 2 made by the engaging device 4 is released, whereby the shutter 2 is allowed to move from the closing position to the opening position due to the urging force of the torsion spring 3.

That is, as shown in Fig. 10, in a state where the shutter 2 existing at the closing position is engaged by the engaging device 4 (see Fig. 10A), a given pushing operation is carried out on the operation button 12, the engaging device 4 is turned about the turn shaft L1 against the urging force of the torsion spring 8 and, as shown in Fig. 10B, the engaging portion 4c is spaced from the engaged portion 2a. This releases the engagement of the shutter 2, whereby the urging force of the torsion spring 3 rotates the shutter 2 to the opening position (see Fig. 10C).

Here, to move the shutter 2 existing at the opening position to the closing position, the engaging device 4 must be turned while picking up and moving the operation portion 7 with fingers. Specifically, in the leading end portion (the portion adjoining the engaged portion 2a) of the shutter 2, there is formed a given slope surface 2e (see Figs. 5 and 6). That is, in a process where the shutter 2 existing at the opening position is rotated to the closing position by operating the operation portion 7, the engaging portion 4c is pushed by the slope surface 2e to thereby turn the engaging device 4 about the turn shaft L1. This makes it possible for the shutter 2 to rotate further and reach the closing position. When the shutter 2 reaches the closing position, the engaging device 4 is turned to its original position by the urging force of the torsion spring 8 and the engaging portion 4c is thus contacted with the engaged portion 2a, whereby the shutter 2 is engaged at the closing position.

According to the cylinder lock protection apparatus of this embodiment, the releasing means includes the magnet lock 5 (manually releasing means) for manually releasing the engagement made by the engaging device 4 and the solenoid 6 (remote-controllably releasing means) to be driven by remote control to release the engagement made by the engaging device 4, and also the magnet lock 5 and solenoid 6 respectively can operate the engaging device 4 to thereby operate the shutter 2. Thus, the shutter 2 can be operated by both the manual operation and remote-control operation, and the engagement release by the magnet lock 5 (manually releasing means) and the engagement release by the solenoid 6 (remote-controllably releasing means) can be carried out through the common engaging device 4, thereby being able to simplify the structure of the apparatus.

Also, since the engaging device 4 according to the invention is a single member including the first portion 4a for receiving the operation force of the magnet lock 5 (manually releasing means) and the second portion 4b for receiving the drive force of the solenoid 6 (remote-controllably releasing means), the structure can be simplified further. Further, since the engaging device 4 according to the invention can be turned about a given shaft (turn shaft L1), and the first portion 4a is formed on one end side thereof and the second portion 4b is formed on the other end side thereof, the engagement release by the magnet lock 5 (manually releasing means) and the engagement release by the solenoid 6 (remote-controllably releasing means) can be carried out smoothly and positively.

The remote-controllably releasing device of this embodiment includes the solenoid 6 which can be energized by remote control to drive the plunger 6a. Since the driving of the plunger 6a can operate the engaging device 4 for release of the engagement, the release of the engagement by the remote-controllably releasing device can be carried out more smoothly and positively. Also, the engaging device 4 includes the cut-out through which the given portion 6aa of the plunger 6a can be inserted, and the engaging device 4 and solenoid 6 are connected together by inserting the plunger 6a through the cut-out Therefore, when compared with a structure where the plunger 6a is fixed to the second portion 4b of the engaging device 4, the engaging device 4 can be prevented against movement even when the plunger 6a is moved due to impacts, vibrations or the like from outside.

Especially, as in this embodiment, the second portion 4b of the engaging device 4 has the cut-out and the engaging device 4 and plunger 6a is connected together by inserting the plunger 6a through the cut-out. In this case, when the engaging device 4 is manually turned (that is, when the magnet lock 5 is rotated), the engaging device 4 can be turned without accompanying the plunger 6a, whereby the release of the engagement made by the engaging device 4 can be carried out more smoothly.

Further, according to the cylinder lock protection apparatus of this embodiment, since the shutter 2 includes the operation portion 7 capable of manually operating the shutter 2 from the opening position to the closing position, the efficiency of the operation to close the key hole Ra using the shutter 2 can be enhanced further. Here, in this embodiment, the operation portion 7 is the portion that is molded integrally with the shutter 2. However, a separate operation portion may also be mounted onto a given portion of the shutter 2 (which is not limited to the portion that is extended from the rotation center portion 2d).

Although description has been given heretofore of this embodiment, the invention is not limited to this but, for example, instead of the magnet lock 5, other type of manually releasing device for manually releasing the engagement made by the engaging device 4 may also be employed; and, instead of the solenoid 6, other type of remote-controllably releasing device (for example, a general-purpose actuator) to be driven by remote control for releasing the engagement made by the engaging device 4 may also be employed. Especially, as the remote-controllably releasing device, a general-purpose motor can be used. In this case, preferably, it may be structured such that the output shaft of the motor idles during the manual operation to be executed by the manually releasing device.
Similarly, the shutter 2 is not limited to the type that is rotated between the opening position and closing position as in this embodiment but, but there may also be employed other type of shutter, for example, which slides between the opening position and closing position.

Further, in this embodiment, by operating the operation button 12 provided on the grip portion 11 of the ignition key IK, the remote-controllably releasing device (solenoid 6) is operated to release the engagement of the shutter 2. However, a remote-controllably releasing device constituted of the solenoid 6 or the like may also be operated by a remote control (a remote controller) provided separately from the grip portion 11. Here, in this embodiment, although the invention is applied to a cylinder lock for use in a two wheeled vehicle, the invention may also be applied to a cylinder lock for use in, for example, a ship, an ATV, or a snowmobile.

### [Industrial Applicability]

The invention can be applied to various cylinder lock protection apparatus having different outer shapes or having other functions provided additionally, so long as the releasing device includes a manually releasing device for manually releasing tire engagement made by the engaging device and a remote-controllably releasing device to be driven by remote control for releasing the engagement made by the engaging device, and the manually releasing device and remote-controllably releasing device respectively can operate the engaging device to thereby operate the shutter.

**[Description of Reference Numerals and Signs]**

| | | | |
|---|---|---|---|
| 1: | Housing | 2: | Shutter |
| 3: | Torsion spring (urging means) | | |
| 4: | Engaging device | | |
| 5: | Magnet lock (manually releasing means) (releasing means) | | |
| 6: | Solenoid (remote-controllably releasing means) (releasing means) | | |
| 7: | Operation portion | | |
| 8: | Torsion spring | | |
| 9: | Coil spring | | |
| 10: | LED | | |
| 11: | Grip portion | | |
| 12: | Operation button | | |
| IK: | Ignition key | | |
| R: | Rotor | | |
| Ra: | Key hole | | |

## Claims

1. A cylinder lock protection apparatus, comprising:
a housing (1) adapted to be provided above a rotor (R) in which a key hole (Ra) for inserting and pulling out an ignition key (IK) is formed;
a shutter (2) which is movable between a closing position and an opening position within the housing (1) and adapted to close the key hole (Ra) at the closing position and to open the key hole (Ra) at the opening position;
urging means (3) adapted to normally urge the shutter (2) toward the opening position;
engaging means (4) adapted to be capable of engaging the shutter (2) existing at the closing position; and
releasing means (5, 6) adapted to release engagement made by the engaging means (4) to move the shutter (2) from the closing position to the opening position using an urging force given by the urging means (3),
wherein the releasing means (5, 6) includes manually releasing means (5) for manually releasing the engagement made by the engaging means (4) and remote-controllably releasing means (6) drivable by remote control for releasing the engagement made by the engaging means (4), and the manually releasing means (5) and the remote-controllably releasing means (6) respectively are capable of operating the engaging means (4) to thereby operate the shutter (2); and
wherein the engaging means (4) is a single member including a first portion (4a) adapted to receive the operation force of the manually releasing means (5) and a second portion (4b) adapted to receive the drive force of the remote-controllably releasing means (6);
**characterized in that**
the engaging means (4) is capable of being turned about a given shaft (LI), while the first portion (4a) is formed on one end side of the engaging means (4) and the second portion (4b) is formed on the other end side thereof.

2. The cylinder lock protection apparatus according to Claim 1, wherein the remote-controllably releasing means (6) includes a solenoid (6) energizable by remote control to drive a plunger (6a), and the solenoid (6), due to the driving of the plunger (6a), can operate the engaging means (4) to thereby release the engagement.

3. The cylinder lock protection apparatus according to Claim 2, wherein the engaging means (4) includes a cut-out through which a given portion (6aa) of the plunger (6a) can be inserted, and the plunger (6a) is inserted through the cut-out to thereby connect together the engaging means (4) and the solenoid (6).

4. The cylinder lock protection apparatus according to any one of Claims 1 to 3, wherein the shutter (2) includes an operation portion (7) capable of manually operating the shutter from the opening position to the closing position.

## Patentansprüche

1. Zylinderschloss-Schutzvorrichtung, die umfasst:
ein Gehäuse (1), das so eingerichtet ist, dass es sich oberhalb eines Drehkörpers (R) befindet, in dem ein Schlüsselloch (Ra) zum Einführen und Herausziehen eines Zündschlüssels (IK) ausgebildet ist;
einen Verschluss (2), der zwischen einer Schließ-Position und einer Öffnungs-Position innerhalb des Gehäuses (1) bewegt werden kann und zum Schließen des Schlüssellochs (Ra) in der Schließ-Position sowie zum Öffnen des Schlüssellochs (Ra) in der Öffnungs-Position eingerichtet ist;
eine Drück-Einrichtung(3), die so eingerichtet ist, dass sie den Verschluss (2) normalerweise in Richtung der Öffnungs-Position drückt;
eine Eingriffs-Einrichtung (4), die so eingerichtet ist, dass sie mit dem Verschluss (2) in Eingriff kommt, der sich in der Schließ-Position befindet; sowie
Löse-Einrichtungen (5, 6), die so eingerichtet sind, dass sie durch die Eingriffs-Einrichtung (4) hergestellten Eingriff lösen, um den Verschluss (2) unter Nutzung einer durch die Drück-Einrichtung (3) ausgeübten Drück-Kraft von der Schließ-Position an die Öffnungs-Position zu bewegen,
wobei die Löse-Einrichtungen (5, 6) eine manuelle Löse-Einrichtung (5) zum manuellen Lösen des durch die Eingriffs-Einrichtung (4) hergestellten Eingriffs sowie eine fernbedienbare Löse-Einrichtung (6) einschließen, die mittels Fernbedienung angesteuert werden kann, um den durch die Eingriffs-Einrichtung (4) hergestellten Eingriff zu lösen, und die manuelle Löse-Einrichtung (5) sowie die fernbedienbare Löse-Einrichtung (6) jeweils in der Lage sind, die Eingriffs-Einrichtung (4) zu betätigen, um so den Verschluss (2) zu betätigen;
wobei die Eingriffs-Einrichtung ein einzelnes Element ist, das einen ersten Abschnitt (4a), der zum Empfangen der Betätigungs-Kraft der manuellen Löse-Einrichtung (5) eingerichtet ist, sowie einen zweiten Abschnitt (4b) einschließt, der zum Empfangen der Ansteuerungs-Kraft der fernbedienbaren Löse-Einrichtung (6) eingerichtet ist; **dadurch gekennzeichnet, dass**
die Eingriffs-Einrichtung (4) um eine vorgegebene Welle (LI) herumgedreht werden kann, wobei der erste Abschnitt (4a) an der Seite eines Endes der Eingriffs-Einrichtung (4) ausgebildet ist und der zweite Abschnitt (4b) an der Seite des anderen Endes derselben ausgebildet ist.

2. Zylinderschloss-Schutzvorrichtung nach Anspruch 1, wobei die fernbedienbare Löse-Einrichtung (6) einen Elektromagneten (6) enthält, der mittels Fernbedienung zum Ansteuern eines Kolbens (6a) erregt werden kann und der Elektromagnet (6) aufgrund des Ansteuerns des Kolbens (6a) die Eingriffs-Einrichtung (4) betätigen kann, um damit den Eingriff zu lösen.

3. Zylinderschloss-Schutzvorrichtung nach Anspruch 2, wobei die Eingriffs-Einrichtung (4) einen Ausschnitt aufweist, durch den ein vorgegebener Abschnitt (6aa) des Kolbens (6a) eingeführt werden kann, und der Kolben (6a) über den Ausschnitt eingeführt wird, um damit die Eingriffs-Einrichtung (4) und den Elektromagneten (6) miteinander zu verbinden.

4. Zylinderschloss-Schutzvorrichtung nach einem der Ansprüche 1 bis 3, wobei der Verschluss (2) einen Betätigungs-Abschnitt (7) enthält, der in der Lage ist, den Verschluss manuell von der Öffnungs-Position an die Schließ-Position zu bewegen.

## Revendications

1. Dispositif de protection de serrure à cylindre, comprenant :
un logement (1) adapté pour être placé au-dessus d'un rotor (R) dans lequel un trou de clé (Ra) pour insérer et retirer une clé de contact (IK) est formé ;
un obturateur (2) qui est mobile entre une position de fermeture et une position d'ouverture dans le logement (1) et adapté pour fermer le trou de clé (Ra) dans la position de fermeture et pour ouvrir le trou de clé (Ra) dans la position d'ouverture ;
des moyens de poussée (3) adaptés pour pousser normalement l'obturateur (2) vers la position d'ouverture ;
des moyens de prise (4) adaptés pour pouvoir venir en prise avec l'obturateur (2) existant dans la position de fermeture ; et
des moyens de relâchement (5, 6) adaptés pour relâcher la prise établie par les moyens de prise (4) pour déplacer l'obturateur (2) de la position de fermeture vers la position d'ouverture en utilisant une force de poussée donnée par les moyens de poussée (3),
dans lequel les moyens de relâchement (5, 6) incluent des moyens de relâchement manuels (5) pour relâcher manuellement la prise établie par les moyens de prise (4) et des moyens de relâchement pouvant être commandés à distance (6) pouvant être actionnés par une commande à distance pour relâcher la prise établie par les moyens de prise (4), et les moyens de relâchement manuels (5) et les moyens de relâchement pouvant être commandés à distance (6) peuvent respectivement actionner les moyens de prise (4) pour ainsi actionner l'obturateur (2) ; et
dans lequel les moyens de prise (4) sont un seul élément incluant une première partie (4a) adaptée pour recevoir la force d'actionnement des moyens de relâchement manuels (5) et une seconde partie (4b) adaptée pour recevoir la force d'actionnement des moyens de relâchement pouvant être commandés à distance (6) ; **caractérisé en ce que**
les moyens de prise (4) peuvent tourner autour d'un arbre donné (LI), alors que la première partie (4a) est formée sur un côté d'extrémité des moyens de prise (4) et la seconde partie (4b) est formée sur l'autre côté d'extrémité de ceux-ci.

2. Dispositif de protection de serrure à cylindre selon la revendication 1, dans lequel les moyens de relâchement pouvant être commandés à distance (6) incluent un solénoïde (6) pouvant être alimenté en énergie par commande à distance pour actionner un plongeur (6a), et le solénoïde (6), du fait de l'entraînement du plongeur (6a), peut actionner les moyens de prise (4) pour ainsi relâcher la prise.

3. Dispositif de protection de serrure à cylindre selon la revendication 2, dans lequel les moyens de prise (4) incluent une découpe à travers laquelle une partie donnée (6aa) du plongeur (6a) peut être insérée, et le plongeur (6a) est inséré à travers la découpe pour ainsi relier ensemble les moyens de prise (4) et le solénoïde (6).

4. Dispositif de protection de serrure à cylindre selon l'une quelconque des revendications 1 à 3, dans lequel l'obturateur (2) inclut une partie d'actionnement (7) pouvant actionner manuellement l'obturateur de la position d'ouverture vers la position de fermeture.
